**Europäisches Patentamt**

**European Patent Office**

**Office européen des brevets**

(19)

(11) Veröffentlichungsnummer : **0 220 509 B2**

# (12) NEUE EUROPÄISCHE PATENTSCHRIFT

(45) Veröffentlichungstag der neuen Patentschrift :
**21.10.92 Patentblatt 92/43**

(51) Int. Cl.⁵ : **C09C 1/00,** C09C 3/06

(21) Anmeldenummer : **86113274.4**

(22) Anmeldetag : **26.09.86**

(54) **Glasur- und emailstabile Perlglanzpigmente.**

(30) Priorität : **08.10.85 DE 3535818**

(43) Veröffentlichungstag der Anmeldung :
**06.05.87 Patentblatt 87/19**

(45) Bekanntmachung des Hinweises auf die
Patenterteilung :
**23.11.89 Patentblatt 89/47**

(45) Bekanntmachung des Hinweises auf die
Entscheidung über den Einspruch :
**21.10.92 Patentblatt 92/43**

(84) Benannte Vertragsstaaten :
**BE CH DE FR GB IT LI NL**

(56) Entgegenhaltungen :
**EP-A- 0 141 174**
**DE-A- 1 962 492**
**DE-A- 2 009 566**

(56) Entgegenhaltungen :
**DE-A- 2 312 535**
**DE-A- 3 229 837**
**DE-B- 1 467 468**
**FR-A- 2 145 595**
**FR-A- 2 311 824**
**US-A- 3 087 828**

(73) Patentinhaber : **MERCK PATENT**
**GESELLSCHAFT MIT BESCHRÄNKTER**
**HAFTUNG**
**Frankfurter Strasse 250 Postfach 4119**
**W-6100 Darmstadt (DE)**

(72) Erfinder : **Rau, Axel, Dr.**
**Hans-Thoma-Strasse 8**
**W-7798 Pfullendorf (DE)**
Erfinder : **Ambrosius, Klaus, Dr.**
**Waldschmidtstrasse 65**
**W-6000 Frankfurt am Main (DE)**
Erfinder : **Franz, Klaus-Dieter, Dr.**
**Insterburger Strasse 12**
**W-6233 Kelkheim (DE)**

EP 0 220 509 B2

Jouve, 18, rue Saint-Denis, 75001 PARIS

## Beschreibung

Die Erfindung betrifft Perlglanzpigmente auf der Basis von mit Metalloxiden, insbesondere Titandioxid, beschichteten Glimmerschuppen, die eine verbesserte Stabilität in Glasuren und Emaillen besitzen.

Die bisher bekannten Metalloxid/Glimmerpigmente werden bei der Herstellung in vielen Fällen bei Temperaturen von bis zu 1000 °C geglüht und sind daher als äußerst temperaturbeständig anzusehen. Trotzdem kommen diese Pigmente üblicherweise nicht in Dekorglasuren oder Email zum Einsatz, da bei den dort üblichen Einbrennbedingungen von etwa 750-850 °C die Pigmente von den aggressiven Schmelzflüssen so stark angegriffen werden, daß der Perlglanzeffekt sehr stark beeinträchtigt wird. Lediglich die Pigmentierung von Dekorflüssen auf Glas, wobei niedrigere Temperaturen von etwa 500-750 °C angewendet werden, ist bisher mit Erfolg durchgeführt worden.

Es bestand also ein Bedürfnis nach Pigmenten, mit denen auch in den bei hohen Temperaturen eingebrannten Glasuren und Emaillen dekorative Perlglanzeffekte erzeugt werden können.

Es wurde jetzt gefunden, daß durch eine zusätzliche Beschichtung mit einer relativ dicken Außenschicht von Cerdioxid oder Zinn- und Cerdioxid die gewünschte Stabilisierung erreicht werden kann.

Gegenstand der Erfindung sind daher Perlglanzpigmente auf der Basis von mit Metalloxiden, insbesondere Titandioxid, beschichteten Glimmerschuppen, die dadurch gekennzeichnet sind, daß die Pigmente zur Erzielung einer verbesserten Stabilität in Glasuren und Emaillen eine Deckschicht aus Cerdioxid oder Zinn- und Cerdioxid besitzen, die mindestens 10 Gew.% des Gesamtpigments ausmacht.

Gegenstand der Erfindung ist auch ein Verfahren zur Herstellung von Perlglanzpigmenten auf der Basis von mit Metalloxiden, insbesondere Titandioxid, beschichteten Glimmerschuppen, die eine verbesserte Stabilität in Glasuren und Emaillen aufweisen, wobei man zu einer wäßrigen Suspension eines geglühten oder ungeglühten, mit einem oder mehreren Metalloxiden beschichteten Glimmerschuppenpigments zumindest einmal eine Lösung eines Cersalzes oder Zinn- und Cersalzes gibt, wobei der pH-Wert der Suspension durch gleichzeitige Zugabe einer Base weitgehend konstant gehalten wird in einem Bereich, der eine Hydrolyse des zugegebenen Salzes bewirkt, und das auf diese Wiese mit Cerdioxid oder Zinn- und Cerdioxid beschichtete Pigment abtrennt, gegebenenfalls wäscht und trocknet, und dann calciniert, das dadurch gekennzeichnet ist, daß man die Menge des Cersalzes oder Zinn- und Cersalzes so wählt, daß die Beschichtung mindestens 10 Gew.% des Gesamtpigments ausmacht.

Schließlich ist Gegenstand der Erfindung auch die Verwendung von Perlglanzpigmenten auf der Basis von mit Metalloxiden beschichteten Glimmerschuppen, die eine Außenbeschichtung von Zinn- und/oder Cerdioxid in einer Menge von mindestenhs\$ 10 Gew.% bezogen auf das Gesamtpigmen besitzen, zur Pigmentierung von Glasuren und Emaillen.

Perlglanzpigmente auf Basis von mit Metalloxiden beschichteten Glimmerschuppen, die Zinndioxid enthalten, sind an sich bekannt. So ist in der DE-PS 2214 545 beschrieben, daß durch einen Gehalt an Zinndioxid, wobei die Zinndioxidkonzentration in unmittelbarer Nähe des Glimmers am höchsten ist, eine Titandioxidbeschichtung in der Rutilmodifikation erhalten werden kann. Eine Zinndioxidaußenschicht ist für eine Rutilisierung einer Titandioxidschicht weder geeignet noch in dieser Patentschrift vorbeschrieben.

In der DE-PS 2 522 572 (= FR-A 2 311 824) wird beschrieben, daß zur Erzielung einer Titandioxidbeschichtung in der Rutilform alternierend $TiO_2$- und $SnO_2$-Schichten auf Glimmer aufgefällt werden. Als Deckschicht wird hier vorzugsweise eine $TiO_2$-Schicht verwendet und in jedem Fall ist die Hauptmenge an $SnO_2$ im Inneren der Metalloxidschicht, so daß als Deckschicht - wenn überhaupt - nur eine relativ dünne $SnO_2$-Schicht vorgesehen ist. Die Erkenntnis, daß eine Zinndioxid- oder eine Cerdioxiddeckschicht die Glasur- und Emailstabilität dieser Perlglanzpigmente zu verbessern vermag, ist darin nicht enthalten.

In der DE-B 1 467 468 wird in allgemeiner Form darauf hingewiesen, daß eine ganze Reihe von Metalldioxiden geeignet sind, als Deckschicht auf Glimmer/Metalloxid-Pigmente aufgebracht zu werden, darunter auch $SnO_2$. Weder wird dabei jedoch $SnO_2$ besonders hervorgehoben, noch finden sich Angaben über die Menge, in der eine solche Deckschicht aufgebracht sein sollte, oder gar über vorteilhafte Wirkungen.

In der EP-A- 0 141 174 schließlich wird eine Kombination von $CeO_2$ und Siloxan als Deckschicht auf Glimmer/Metalloxid-Pigmenten zur Verbesserung der Witterungsstabilität beschrieben. $CeO_2$ wird dabei in Mengen von bis zu 3 Gew.% eingesetzt. Auch hieraus konnte kein Hinweis auf eine verbesserte Stabilität in Glasuren und Emaillen gewonnen werden, wenn $CeO_2$ oder $SnO_2$ und $CeO_2$ in einer Menge von mindestens 10 Gew.% als Deckschicht vorliegt.

Um die gewünschte Stabilisierung zu erreichen, sind substantielle Mengen dieser Oxide aufzubringen. So hat es sich als zweckmäßig erwiesen, die Schutzbeschichtung in Mengen von 10-30 Gew.-%, bezogen auf das Gesamtpigment, aufzubringen. Mengen von 10-20 Gew.-% sind dabei bevorzugt. Größere Mengen als 30 % sind an sich möglich, aus wirtschaftlichen Gründen aber nicht sinnvoll. Mit geringeren Mengen als 5 Gew.-% wird in der Regel keine volle Stabilisierung erreicht.

2

Die Aufbringung der Nachbeschichtung erfolgt in an sich bekannter Weise durch hydrolytische Auffällung von Cerdioxidhydrat oder Cerdioxid- und Zinndioxid-hydrat und anschließendes Entwässern und Glühen zu den Oxiden. Man legt dazu eine wäßrige Suspension des zu beschichtenden Pigmentes vor und dosiert bei einem zur Hydrolyse geeigneten pH-Wert die entsprechende Cersalz- oder Cersalz- und Zinnsalzlösung zu, wobei in der Regel durch gleichzeitige Zugabe einer Base der pH-Wert weitgehend konstant gehalten wird. Ein zur Hydrolyse geeigneter pH-Wert liegt in der Regel bei etwa 1-7.

Für die Cerdioxidbeschichtung eignen sich insbesondere Cer(IV)-Salze des Typs $(NH_4)_2Ce(NO_3)_6$ oder $Ce(So_4)_2.4H_2O$. Es können dabei auch sowohl Mischungen verschiedener Salze eines Metalls als auch Mischungen von Zinn- und Cersalzen eingesetzt werden.

Als Basismaterialien, die durch die zusätzliche Beschichtung stabilisiert werden, können insbesondere mit Titandioxid beschichtete Glimmerpigmente eingesetzt werden. Zusätzlich können jedoch in der $TiO_2$-Schicht oder als diskrete Schicht noch andere Metalloxide, wie z.B. $SnO_2$, $Al_2O_3$, $Fe_2O_3$ oder $SiO_2$ enthalten sein. Bevorzugt werden Basispigmente eingesetzt mit $TiO_2$ in der Rutilform.

Die Nachbeschichtung mit Cerdioxid oder Zinn- und Cerdioxid kann unmittelbar im Anschluß an die Auffällung der Titandioxidschicht des Basispigments erfolgen, ohne daß das Basispigment vorher geglüht wird. Vorzugsweise wird jedoch ein bereits geglühtes Basispigment eingesetzt.

Es ist weiterhin möglich, die Nachbeschichtung in mehreren Stufen aufzubringen, wobei jeweils eine Zwischenglühung vorgenommen wird. Dies bringt eine weitere Verbesserung der Stabilität, ist aber so aufwendig, daß man es nur in Ausnahmefällen anwenden wird. Die Glühtemperatur liegt jeweils bei den auch sonst üblichen Temperaturen von etwa 700-900 °C.

Die so nachbeschichteten Pigmente können im Prinzip für alle bekannten Anwendungen eingesetzt werden, aufgrund der verbesserten Stabilität finden sie jedoch vorzugsweise Anwendung bei der Pigmentierung von keramischen Materialien und Oberflächenbeschichtungen wie Glas, Email, Porzellan und allen Arten von Glasuren. Bevorzugt ist die Anwendung in Deck- und Dekoremail sowie in Dekorglasuren.

Beispiel

Zu einer Suspension von 100 g eines nach der DE-OS 25 22 572 hergestellten silberweißen Titandioxidglimmerpigments in Rutilmodifikation mit einer Partikelgrößenverteilung von 10-60 μm in 2000 ml Wasser wird bei 60 °C und einem pH-Wert von 5,5 eine Lösung von 26 g $Ce(SO_4)_2.4H_2O$ in 420 ml verdünnter Schwefelsäure mit einer Geschwindigkeit von 2 ml/min zudosiert, wobei der pH-Wert durch gleichzeitiges Zutropfen einer 25 %igen Natronlauge konstant gehalten wird. Nach halbstündigem Nachrühren wird abgetrennt, mit Wasser gewaschen, bei 120 °C getrocknet und eine halbe Stunde bei 800 °C geglüht.

**Patentansprüche**

1. Perlglanzpigmente auf der Basis von mit Metalloxiden, insbesondere Titandioxid, beschichteten Glimmerschuppen, dadurch gekennzeichnet, daß die Pigmente zur Erzielung einer verbesserten Stabilität in Glasuren und Emaillen eine Deckschicht aus Cerdioxid oder Zinn- und Cerdioxid besitzen, die 10 - 30 Gew.% des Gesamtpigments ausmacht.

2. Perlglanzpigment nach Anspruch 1, dadurch gekennzeichnet, daß die Deckschicht 10 - 20 Gew.% des Gesamtgewichts ausmacht.

3. Verfahren zur Herstellung von Perlglanzpigmenten auf der Basis von mit Metalloxiden, insbesondere Titandioxid, beschichteten Glimmerschuppen, die eine verbesserte Stabilität in Glasuren und Emaillen aufweisen, wobei man zu einer wäßrigen Suspension eines geglühten oder ungeglühten, mit einem oder mehreren Metalloxiden beschichteten Glimmerschuppenpigments zumindest einmal eine Lösung eines Cersalzes oder Zinn- und Cersalzes gibt, wobei der pH-Wert der Suspension durch gleichzeitige Zugabe einer Base weitgehend konstant gehalten wird in einem Bereich, der eine Hydrolyse des Zugegebenen Salzes bewirkt, und das auf diese Weise mit Cerdioxid oder Zinn- und Cerdioxid beschichtete Pigment abtrennt, gegebenenfalls wäscht und trocknet, und dann calciniert, dadurch gekennzeichnet, daß man die Menge des Cersalzes oder Zinn- und Cersalzes so wählt, daß die Beschichtung 10 - 30 Gew.% des Gesamtpigments ausmacht.

4. Verfahren nach Anspruch 3, dadurch gekennzeichnet, daß der pH-Wert der Suspension auf einem Wert zwischen 1 und 7 gehalten wird.

**5.** Verfahren nach Anspruch 3, dadurch gekennzeichnet, daß als Basispigment ein mit Titandioxid in der Rutilform beschichtetes Pigment eingesetzt wird.

**6.** Verwendung von Perlglanzpigmenten auf der Basis von mit Metalloxiden beschichteten Glimmerschuppen, die eine Außenbeschichtung von Zinn- und/oder Cerdioxid in einer Menge von 10 - 30 Gew.% bezogen auf das Gesamtpigment besitzen, zur Pigmentierung von Glasuren und Emaillen.

## Claims

**1.** Nacreous pigments based on mica flakes coated with metal oxides, in particular titanium dioxide characterised in that the pigments have a top coating of cerium dioxide or tin dioxide and cerium dioxide to achieve improved stability in glazes and enamels, the top coating making up 10-30% by weight of the total pigment.

**2.** Nacreous pigments according to Claim 1, characterised in that the top coating makes up 10-20% by weight of the total weight.

**3.** Process for the preparation of nacreous pigments which are based on mica flakes coated with metal oxides, in particular titanium di.oxide, and which have an improved stability in glazes and enamels, at least on the one hand a solution of a cerium salt or of a tin and cerium salt being added to an aqueous suspension of an annealed or non-annealed mica flake pigment coated with one or more metal oxides, the pH value of the suspension being kept largely constant, by simultaneous addition of a base, within a range which effects hydrolysis of the salt added, and the pigment coated in this manner with cerium dioxide or tin dioxide and cerium dioxide being separated off, washed, if appropriate, and dried, and then being calcined characterised in that the amount of cerium salt or tin salt and cerium salt is chosen so that the coating makes up 10-30% by weight of the total pigment.

**4.** Process according to Claim 3, characterised in that the pH value of the suspension is kept at a value between 1 and 7.

**5.** Process according to Claim 3, characterised in that a pigment coated with titanium dioxide in the rutile form is used as the base pigment.

**6.** Use of nacreous pigments which are based on mica flakes coated with metal oxides and have an outer coating of tin dioxide and/or cerium dioxide in an amount of 10-30% by weight based on the total pigment, for pigmenting glazes and enamels.

## Revendications

1.- Pigments offrant un lustre nacré à base de paillettes de mica enduites d'oxyde de métaux, en particulier de dioxide de titane, caractérisés en ce que les pigments sont recouverts d'une couche constituée de dioxyde de cérium ou de dioxide d'étain et de dioxide de cérium, cette couche représent 10-30 % en poids du pigment total, en vue de réaliser une stabilité améliorée dans les glaçures et les émaux.

2.- Pigments offrant un lustre nacré selon la revendication 1 , caractérisés en ce que la couche de recouvrement représente 10-20 % en poids du pigment total.

3.- Procédé de préparation de pigments offrant un lustre nacré à base de paillettes de mica enduites d'oxyde de métaux, en particulier de dioxyde de titane, ces pigments présentant une stabilité améliorée dans les glaçures et les émaux, procédé selon lequel on ajoute au moins une fois une solution d'un sel de cérium ou d'un sel d'étain et d'un sel de cérium à une suspension aqueuse d'un pigment calciné ou non calciné à base de paillettes de mica, enduites d'un ou de plusieurs oxydes de métaux, tandis que l'on maintient la valeur de pH de la suspension constante dans une large mesure, en ajoutant une base qui provoque une hydrolyse du sel que l'on a ajouté tandis que l'on sépare le pigment enduit de cette façon avec le dioxyde de cérium ou le dioxyde d'étain et le dioxyde de cérium, éventuellement on le lave et on le sèche, puis on le calcine, ce procédé étant caractérisé en ce que l'on sélectionne la quantité du sel de cérium ou du sel d'étain et du sel de cérium, de telle sorte que l'enduit représente 10-30 % en poids du pigment total.

4.- Procédé selon la revendication 3, caractérisé en ce que la valeur de pH de la suspension est maintenue dans l'intervalle allant de 1 à 7.

5.- Procédé selon la revendication 3, caractérisé en ce que l'on utilise comme pigment de base, un pigment enduit de dioxyde de titane sous sa forme rutile.

6.- Utilisation de pigments offrant un lustre nacré à base de paillettes de mica enduites d'oxydes de métaux, pigments sur lesquels on a appliqué un enduit de dioxyde d'étain et/ou de dioxyde de cérium en une quantité de 10-30 % en poids calculé sur le pigment total, pour la pigmentation de glaçures et d'émaux.